# EUROPEAN PATENT APPLICATION

(11) **EP 1 491 638 A2**
(43) Date of publication of application: **29.12.2004**
(21) Application number: 04012485.1
(22) Date of filing: 26.05.2004
(51) Int. Cl.: C12Q 1/68, G01N 33/68

(54) **Apparatus and method for nucleic acid spatial ordering**

(30) Priority: 16.06.2003 US 463378
(71) Applicant: Agilent Technologies, Inc. (a Delaware Corporation), Palo Alto, California 94306-2024 (US)
(72) Inventor: Schembri, Carol T., San Mateo CA 94403 (US); Amoresse, Douglas A., Los Altos CA 94022 (US); Bruhn, Laurakay, Mountain View CA 94040 (US); Caren, Michael P., Palo Alto CA 94303 (US); Leonard, Leslie A., Portolla Valley CA 94028 (US); Pittaro, Richard J., San Carlos CA 94070 (US); Webb, Peter G., Menlo Park CA 94025 (US); Wolber, Paul K., Los Altos CA 94022 (US)
(74) Representative: Schoppe, Fritz, Dipl.-Ing.

(57) **Abstract**

An apparatus and method for separating and identifying chemical moieties. The apparatus employs a micro array device coupled to a detector such as a mass spectrometer system. The apparatus both separates and identifies target molecules without the requirement of extraneous tags or fluorescent markers. Methods for using the apparatus are also disclosed.

## Description

### FIELD OF THE INVENTION

The invention relates to the field of micro arrays, and more particularly to an apparatus and method for separating and identifying chemical moieties using arrays.

### BACKGROUND OF THE INVENTION

Polynucleotide arrays (such as DNA or RNA arrays) are known and are used, for example, as diagnostic or screening tools. Such arrays include regions of usually different sequence polynucleotides arranged in a predetermined configuration on a substrate. These regions (sometimes referenced as "features") are positioned at respective locations ("addresses") on the substrate. In use, the arrays, when exposed to a sample, will exhibit an observed binding or hybridization pattern. This binding pattern can be detected upon interrogating the array. For example, all polynucleotide targets (for example, DNA) in the sample can be labeled with a suitable label (such as a fluorescent dye), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample.

Biopolymer arrays can be fabricated by depositing previously obtained biopolymers (such as from synthesis or natural sources) onto a substrate, or by *in situ* synthesis methods. Methods of depositing obtained biopolymers include dispensing droplets to a substrate from dispensers such as pin or capillaries (such as described in US 5,807,522) or such as pulse-jets (such as a piezoelectric inkjet head, as described in PCT publications WO 95/25116 and WO 98/41531, and elsewhere). For *in situ* fabrication methods, multiple different reagent droplets are deposited from drop dispensers at a given target location in order to form the final feature (hence a probe of the feature is synthesized on the array substrate). The *in situ* fabrication methods include those described in US 5,449,754 for synthesizing peptide arrays, and described in WO 98/41531 and the references cited therein for polynucleotides. The *in situ* method for fabricating a polynucleotide array typically follows, at each of the multiple different addresses at which features are to be formed, the same conventional iterative sequence used in forming polynucleotides from nucleoside reagents on a support by methods of known chemistry. This iterative sequence is as follows: (a) coupling a selected nucleoside through a phosphite linkage to a functionalized support in the first iteration, or a nucleoside bound to the substrate (i.e. the nucleoside-modified substrate) in subsequent iterations; (b) optionally, but preferably, blocking unreacted hydroxyl groups on the substrate bound nucleoside; (c) oxidizing the phosphite linkage of step (a) to form a phosphate linkage; and (d) removing the protecting group ("deprotection") from the now substrate bound nucleoside coupled in step (a), to generate a reactive site for the next cycle of these steps. The functionalized support (in the first cycle) or deprotected coupled nucleoside (in subsequent cycles) provides a substrate bound moiety with a linking group for forming the phosphite linkage with a next nucleoside to be coupled in step (a). Final deprotection of nucleoside bases can be accomplished using alkaline conditions such as ammonium hydroxide, in a known manner.

The foregoing chemistry of the synthesis of polynucleotides is described in detail, for example, in Caruthers, Science 230: 281-285, 1985; Itakura et al., Ann. Rev. Biochem. 53: 323-356; Hunkapillar et al., Nature 310: 105-110, 1984; and in "Synthesis of Oligonucleotide Derivatives in Design and Targeted Reaction of Oligonucleotide Derivatives", CRC Press, Boca Raton, Fla., pages 100 et seq., US 4,458,066, US 4,500,707, US 5,153,319, US 5,869,643, EP 0294196, and elsewhere.

As discussed above, there are a number of techniques for constructing microarrays. In addition, microarrays may be used to identify and quantitate different types of RNA, DNA or protein molecules in a sample. A microarray comprises a number of surface bound molecules that may be arranged in defined locations. For instance, a sample containing an unknown target is often labeled with a fluorescent dye, applied to the array and allowed to react or hybridize to a probe over a period of time. The array is then washed to remove unbound or inappropriately bound sample and scanned for fluorescent signal. The detected signal at each location is correlated to the probe identity.

In the above example, the array provides a few major functions. The first function is that is acts as a separation device that organizes molecules from the sample into known locations and allows the remainder to be discarded. Second, it is a platform to analyze how many sample molecules were detected at each location. The two functions are independent and each confers its own requirements on the assay design.

The separation function requires that the known probe molecule be attached to the surface in a known or defined location. The pattern of features can be in the form of a grid or a linear arrangement. The detection of these hybridizations is due largely to the use of fluorescent dyes coupled to target molecules. Labeling is typically performed during a sample preparation process that can add significant time to the assay completion. Secondly, the use of labels increases costs, and can potentially cross react with other molecules or probes. Therefore, there is a need for an array system, apparatus or technique that eliminates the need for using labels. In addition, there is also a need for such apparatus or method to provide a high level of specificity and reproducibility for detecting and separating small sample volumes. These problems and others are addressed by the present invention.

### SUMMARY OF THE INVENTION

The invention provides an apparatus for identifying a chemical moiety from a sample solution. The system or apparatus comprises a substrate or housing having a channel with at least one linear array for capturing a chemical moiety from a sample solution, and a detector downstream from the substrate for detecting the chemical moiety received from the substrate channel after the chemical moiety has been released from the linear array in a defined order. The detector may comprise a variety of analytical devices including a mass spectrometer.

The invention also provides a method for separating and detecting a chemical moiety. The method comprises contacting a solution comprising a target molecule to a probe positioned in a micro fluidic channel, binding the target molecule to the probe to separate the target molecule from the solution, releasing the target molecule off of the probe, and detecting the target molecule released from the probe.

### BRIEF DESCRIPTION OF THE DRAWINGS

Embodiments of the invention will now be described with reference to the drawings, in which:
FIG. 1 shows a general block diagram of the present invention.
FIG. 2 illustrates a substrate carrying an array, of the invention;
FIG. 3 is an enlarged view of a portion of FIG. 1 showing ideal spots or features;
FIG. 4 is an enlarged illustration of a portion of the substrate shown in FIG. 2.
FIG. 5A shows a perspective view of the present invention coupled to a mass spectrometer system.
FIG. 5B shows an enlarged portion of FIG. 5A.
FIG. 6A shows a first step provided by the method of the present invention.
FIG. 6B shows a second step provided by the method of the present invention.
FIG. 6C shows a third step provided by the method of the present invention.

### DETAILED DESCRIPTION OF THE INVENTION

Before describing the invention in detail, it must be noted that, as used in this specification and the appended claims, the singular forms "a," "an," and "the" include plural referents unless the context clearly dictates otherwise. Thus, for example, reference to "an array" includes more than one "array". Reference to a "mass spectrometer" or "substrate" includes more than one "mass spectrometer" or "substrate". In describing and claiming the present invention, the following terminology will be used in accordance with the definitions set out below.

A "biopolymer" is a polymer of one or more types of repeating units. Biopolymers are typically found in biological systems (although they may be made synthetically) and particularly include peptides or polynucleotides, as well as such compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another. A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer (for example, a single amino acid or nucleotide with two linking groups one or both of which may have removable protecting groups). A "peptide" is used to refer to an amino acid multimer of any length (for example, more than 10, 10 to 100, or more amino acid units). A biomonomer fluid or biopolymer fluid references a liquid containing either a biomonomer or biopolymer, respectively (typically in solution).

A "set" or "sub-set" of any item (for example, a set of features) may contain one or more than one of the item (for example, a set of clamp members may contain one or more such members). An "array", unless a contrary intention appears, includes any one, two or three dimensional arrangement of addressable regions bearing a particular chemical moiety or moieties (for example, biopolymers such as polynucleotide sequences) associated with that region. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or ''target probes" may be the one that is to be evaluated by the other (thus, either one could be an unknown mixture of polynucleotides to be evaluated by binding with the other). An "array layout" refers collectively to one or more characteristics of the features, such as feature positioning, one or more feature dimensions, and some indication of a moiety at a given location. "Hybridizing" and "binding", with respect to polynucleotides, are used interchangeably. When one item is indicated as being "remote" from another, this is referenced that the two items are at least in different buildings, and may be at least one mile, ten miles, or at least one hundred miles apart.

The term "adjacent" or "adjacent to" refers to a component or element that is near, next to or adjoining. For instance, an array may be adjacent to a detector.

All patents and other cited references are incorporated into this application by reference.

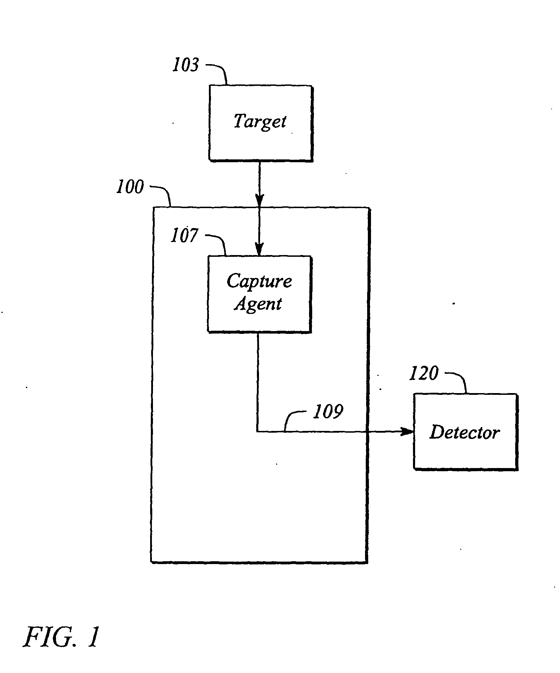

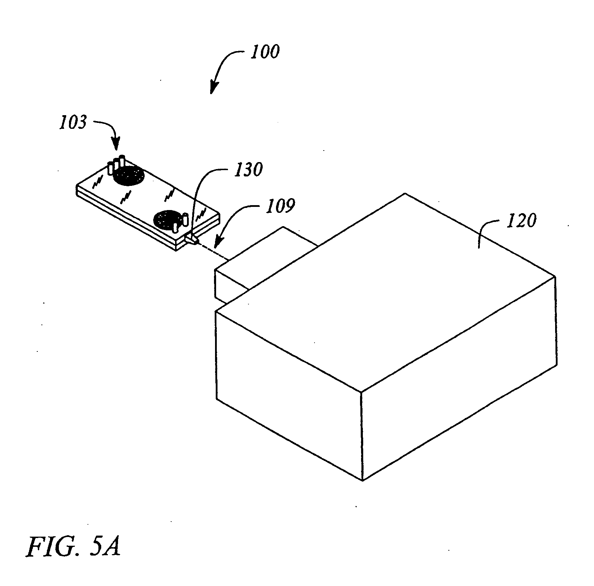

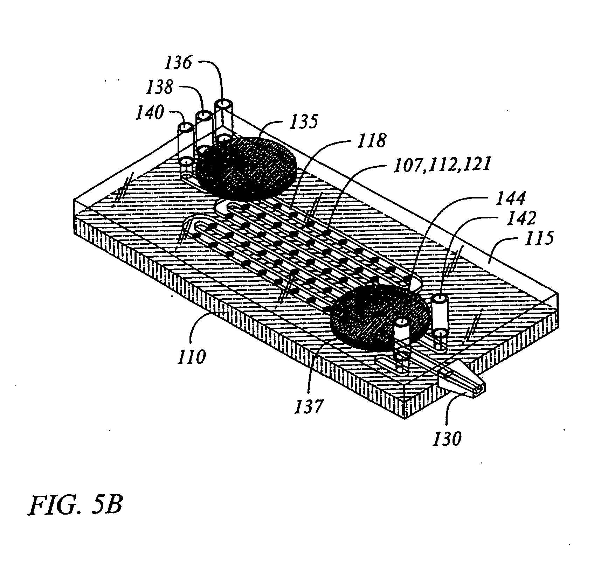

FIG. 1 shows a general block diagram of the present invention. The invention provides an apparatus for identifying a chemical moiety 100. The apparatus for identifying a chemical moiety 100 provides a capture agent 107 for capturing a target 103, a transport device 109 for transporting the target 103 after it has been captured and released from the capture agent 107 and a detector 120 downstream from the transport device 109 for detecting the target 103. In certain embodiments the capture agent 107 may be positioned in, on, or adjacent to the transport device 109 or the detector 120. In addition, the capture agent 107 may comprise an array 112, the transport device 109 may comprise a first substrate 115 having a channel 118, and the detector 120 may comprise a mass spectrometer system (See FIGS. 5A and 5B). The array 112 may be built directly into the channel 118 of the first substrate 115 or may be attached or inserted into position by mounting a slide or slides.

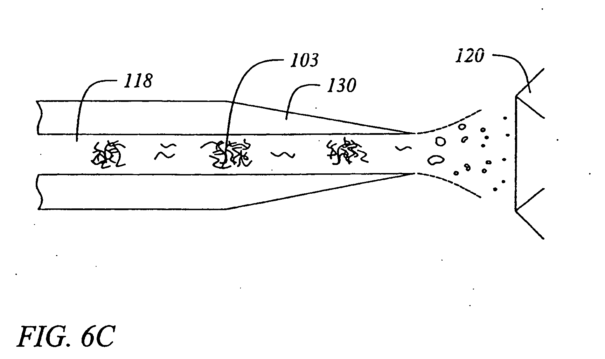

The first substrate 115 may comprise a number of different materials well known in the art. For instance, the first substrate 115 may comprise a material selected from the group consisting of metals, plastics, , rubber, silica or silicon based materials, and composite materials. The first substrate 115 may comprise flexible or non-flexible materials. As mentioned the first substrate 115 may comprise one or more channels 118. The channel 118 may comprise a micro fluidic channel having one or more probes 121. The channel 118 can be designed to be curved, linear or take on a variety of shapes and sizes. In addition, the probes 121 may comprise a variety of different biopolymers that may be oriented in a variety of different ways. The probes 121 may be positioned in linear arrangements. A linear arrangement provides an easy and efficient way to order targets 103 before capture and after release from the probes 121. However, the size of the channel 118 could be much larger or much smaller. An important function of the channel 118 is to maintain the order of the targets 103 once they have bound to the probes 121 of the array 112. Therefore, the channel 118 needs to be small enough to prevent the intermixing of released targets 103, but large enough to allow the target 103 to release from probes 121 and to move down the channel 118 toward the detector 120 (See FIG. 6C). In general, the microfluidic channel will have one dimension that is 100 microns or less.

The sample may comprise one or more targets 103 that are transported through the channel 118. Transport may be accomplished through osmotic pressure, fluidic pressure, Brownian motion, diffusion, osmotic gradient, electro-osmotic gradient, gravity, capillary action, active or passive transport, electrophoresis, pressure, suction or creation of a vacuum or artificial vacuum or other physical or mechanical forces that are well know in the art. The technique is not important. However, functionally it is important that the technique efficiently regulates and allows the targets 103 to bind to the probes 121 that are attached or positioned in the channel 118 of the first substrate 115.

The array 112 may comprise a micro array or similar type device. As discussed, the array 112 may be constructed on the interior wall of channel 118 (See FIGS. 5A and 5B). Alternatively, the array 112 may be first designed on a slide and then inserted or mounted into the first substrate 115 that may appropriately position the probes 121 for hybridizing to target 103 in a sample. For simplicity the details of the array 112 are now described in relation to construction on a glass slide. The invention should not be limited to be interpreted to this embodiment and may also include a similar construction or design built on, in or attached to the first substrate 115.

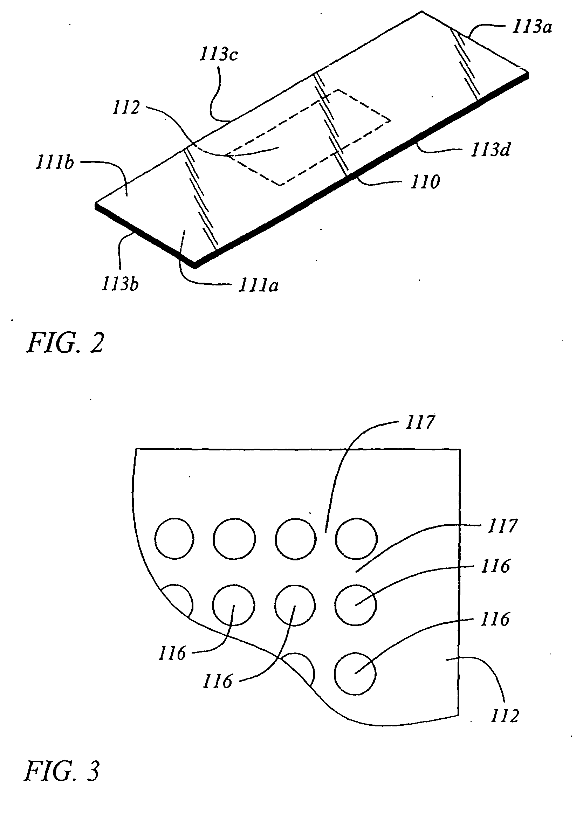

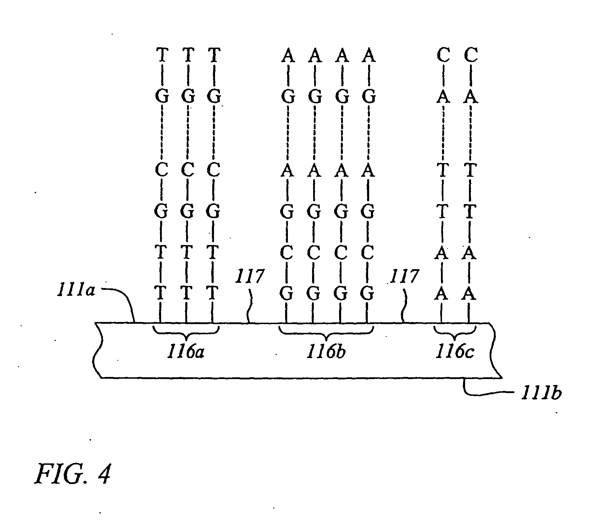

Referring now to FIGS. 2-4, typically the methods and apparatus of the present invention generate or use a contiguous planar second substrate 110 carrying an array 112 disposed on a surface 111a. It will be appreciated though, that more than one array (any of which are the same or different) may be present on the surface 111a, with or without spacing between such arrays. Note that one or more of the arrays 112 together will cover the substantial regions of the surface 111a, with regions of the surface 111a adjacent to the opposed sides 113c, 113d and the leading end 113a and the trailing end 113b of the second substrate 110. The other surface 111b of the second substrate 110 does not carry any of the arrays 112. Each of the arrays 112 can be designed for testing against any type of sample, whether a trial sample, reference sample, a combination of them, or a known mixture of polynucleotides (in which latter case the arrays may be composed of features carrying unknown sequences to be evaluated). The second substrate 110 may be of any shape, and any holder used with it adapted accordingly, although the second substrate 110 will typically be rectangular in practice. The array 112 contains multiple spots or features 116 of biopolymers in the form of polynucleotides. A typical array may contain from more than ten, more than one hundred, more than one thousand or ten thousand features, or even more than from one hundred thousand features. All of the features 116 may be different, or some or all could be the same. In the case where the array 112 is formed by the conventional *in situ* or deposition of previously obtained moieties, as described above, by depositing for each feature at least one droplet of reagent such as by using a pulse jet such as an inkjet type head, interfeature areas 117 will typically be present which do not carry any polynucleotide. It will be appreciated though, that the interfeature areas 117 could be of various sizes and configurations. Each feature carries a predetermined polynucleotide (which includes the possibility of mixtures of polynucleotides). As per usual, A, C, G, T represent the usual nucleotides. It will be understood that there may be a linker molecule (not shown) of any known types between the surface 111a and the first nucleotide.

The array 112 may comprise a biopolymer or in particular a nucleic acid or nucleotide sequence. Other biopolymers know in the art may be employed such as proteins, peptides, amino acids, nucleotides, nucleosides, nucleic acids, RNA, DNA, single stranded RNA, single stranded DNA, double stranded DNA or RNA etc.. may be employed with the present invention. The target 103 or probe 121 sequence may be known or unknown. The biopolymers may be arranged in any of a number of orders and/or orientations on the array 112. In particular, an effective arrangement for separation and identification is a linear array. This allows for the capture and release of biopolymers in a defined order or sequence.

After the array is constructed, the capillary is assembled. If the array is located on substrate 110, it is assembled into substrate 115 to form channel 118. Alternatively, the linear array 112 may be constructed directly in a preformed open channel 118 on substrate 115. Channel 118 is then closed. It may be closed by bonding flat material to the surface of substrate 115 or by bonding a mirror image of channel 118 to the substrate. Adhesives, sealants, ultrasonic welding and other techniques known in the art may be used to seal the channel. The third alternative is to construct linear array 112 on a flexible substrate, roll the material into a tube and seal it to form channel 118.

The detector 120 is positioned downstream from the array 112. Once the targets 103 have been separated from the sample they may then pass to the detector 120. The detector 120 is designed to receive the targets 103 and may record and quantify their nature, number, elution profile and order of elution from the array 112. Other parameters are also possible based on the nature of the detector 120 that is employed. The detector 120 may comprise a variety of devices and systems well known in the art. For instance, the detector 120 may comprise a mass spectrometer system, raman system, UV-VIS system, NMR system, EPR system, furnace atomic absorption, flame atomic absorption, IR spectrometer, HPLC system, electrophoresis system, fluorescence spectrometer, ICP system, luminometer, or other similar analytical instrument that may detect a biopolymer. The detector 120 may be coupled to the first substrate 115 either directly or through any number of conduits, channels, attachments or devices. These transport devices are important only to the extent that they allow for efficient sample transfer without loss of target 103.

In one embodiment (See FIGS. 5A and 5B), the detector 120 may comprise a mass spectrometer system. Ideally, an electrospray tip 130 is integral with the linear array or apparatus 100. An exemplary device is discussed in U.S. Patent No. 6459080 entitled "Miniaturized Device for Separating the Constituents of a Sample and Delivering the Constituents of the Separated Sample to Mass Spectrometer". The patent discloses a micro device having an integrated protruding emitter and a method for producing the micro device. The micro fluidic device has been effectively designed on polyimide (Kapton) and polyetheretherketone (PEEK). DNA and protein micro array technology have been demonstrated on glass coated PEEK (See, Microarrays on Flexible Substrates Laminated to Microfluidic Structures, Serial No. 10/286089). MALDI or AP-MALDI are alternative mass spectrometry systems for detection. To use the MALDI system the eluted sample is spotted by aliquot onto the MALDI plate and then the plate is loaded into the mass spectrometer.

FIGS. 5A and 5B show an embodiment of the present invention. The apparatus for identifying a chemical moiety 100 is connected to the detector 120 by the transport device 109. The apparatus for identifying the chemical moiety 100 comprises the first substrate 115 having a channel 118 that comprises the capture agent 107. An input valve 135 and output valve 137 are coupled to the channel 118. Input valve 135 may be switched into various modes and inlet ports. For instance, there may be a sample inlet port 136, a wash buffer inlet port 138 and an elution buffer inlet port 140. Either or all of these inlet ports may be employed with the present invention. Other inlet ports may also be employed. The input valve 135 may be switched to allow flow from any one of these inlet ports to channel 118. At the opposite end of the channel 118 is the exit valve 137. Exit valve 137 may comprise or be connected to one or more wash outlet ports 142, salvage output ports 144, or electrospray tips 130. Exit valve 137 may be switched to the wash outlet port 142, salvage outlet port 144, or to electrospray tip 130.

While a significant benefit of the apparatus is to avoid the use of labels, it may be advantageous in certain instances to combine detection techniques. A labeled sample allows for fluorescent detection *in-situ.* A follow up elution or mass spectrometry measurement may provide more detailed information or confirmation of the measurements. Alternatively, it may be desirable to elute the target and analyze by gel eletrophoresis. This secondary and more expensive approach may be of interest for a reference laboratory or a central research facility.

Having described the apparatus of the invention, a description of the method of assembling or making the array hybridization apparatus is now in order.

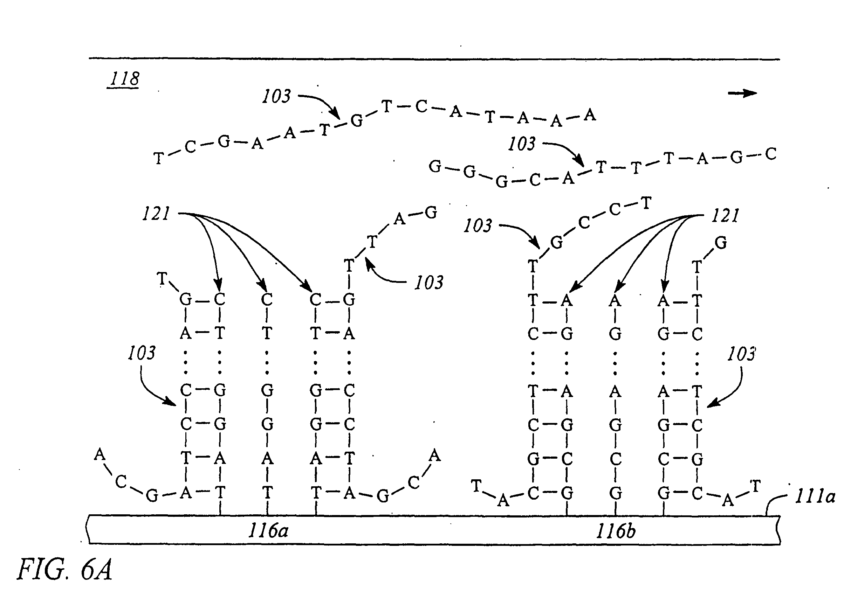

Referring now to FIGS. 6A-6C the method of the present invention will now be discussed.

FIG. 6A shows the first step in the method of the present invention. A sample is introduced into the apparatus by any of a number of methods including injection, manual application etc. The figures show the sample being input by way of sample inlet port 136. There may be a sipper at the entrance of the channel which projects into the sample to draw the sample into the channel 118. A design of a sipper is described in the patent application entitled "Extensible Spiral for Flex Circuit", Serial No. 09/981,840, which is hereby incorporated by reference. Ideally, the entrance of the channel 118 may be coupled to a valve that allows for sample injection and then switches to inject a wash fluid. There is no requirement that the sample volume match the volume of the channel 118. It may be substantially larger or smaller. The sample may contain a target of interest. The sample with potential target of interest is moved past the probes of the array 112. The probes of the array 112 then capture the targets 103 and remove them from the sample. The apparatus can be designed to regulate the sample flow through the channel 118. FIG. 6A shows the removal of the targets 103 from the sample as they bind to the array 112. The figure shows that the remainder of the sample or the bulk solution is then allowed to pass through the channel 118 of the substrate 110. The sample may be allowed to remain or cycle through channel 118 for minutes or hours as necessary to ensure adequate binding or hybridization to probe 121. The apparatus may include devices to control the time of sample exposure and heaters and coolers to control the temperature of the sample. After sufficient time has elapsed for binding or hybridization, the sample is washed out of the channel and wash buffers are introduced to remove any non-specifically bound target 103. The apparatus may control the timing and temperature of the wash buffers.

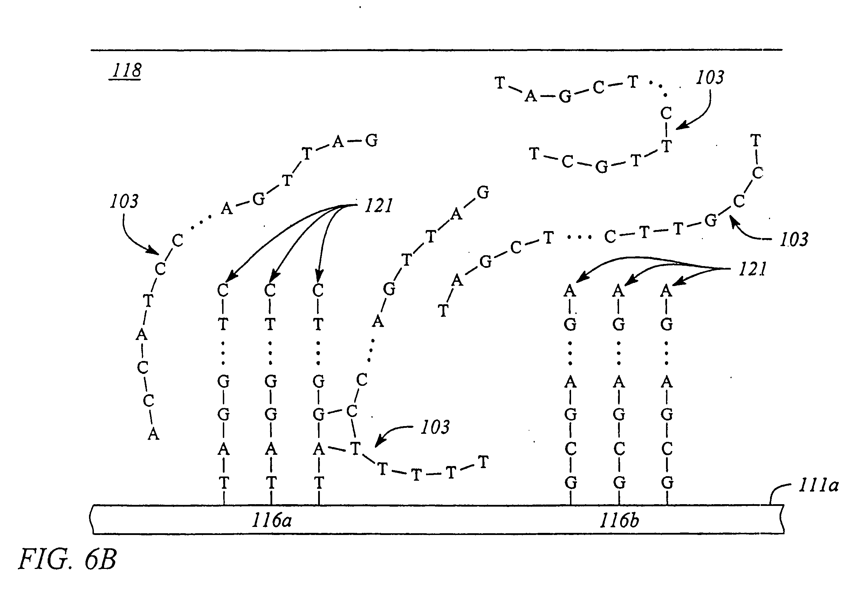

FIG. 6B shows the second step of the method of the present invention. In this step, an elution buffer or other agent may then be flushed through the apparatus. This allows the array 112 to release the targets 103 that have bound to the probes of the array 112. The targets 103 may also be released by raising the temperature of the solution or array around. the probes 121. For instance, if the targets 103 and the probes 121 are nucleic acids, the temperature can be raised above their melting temperatures (Tm) to allow the nucleic acids to separate. This can be done for the entire channel driving off all of the captured targets 103 at once, or can be done serially in zone or by individual features to retain spatial segregation of the target eluants. The best methods will depend upon the diffusion characteristics of the targets 103 in a particular solution. Other mechanisms or methods for releasing the captured targets 103 may also be employed. For instance, the probes 121 may be held to the surface by a cleavable linker molecule. Thus, the entire probe/target duplex can be removed from the surface by cleaving the linker. Since the size of the channel 118 is small enough, the targets 103 maintain the same special ordering as they are bound to the probes 121. This process, therefore, serves as an effective separation technique. Depending on the specific construction of the apparatus, the captured targets 103 may be eluted from either end of the linear array. Therefore, the order of elution may be identical to the order of the probes 121 in the linear array or in the opposite order.

FIG. 6C shows the final step in the method of the present invention. In this step the targets 103 enter the detector 120 from the electrospray tip 130. They generally enter the detector 120 in the order in which they have eluted from the array 112. The detector may then record and determine the order, time, chemical composition, quantity or amount of target. By way of example, but not limitation, a micro-channel formed on a glass chip by photolithography and etching by methods known in the art. The cleaned interior of the channel is coated in poly-L-Iysine. Pre-synthesized DNA oligomers are deposited in separate features along the interior of the channel and are bound by the poly-lysine. Oligos specific for controlled or known targets 103, called control features, are placed at the beginning and end of the array and at known locations along the linear array. There is a length of channel at either end which does not have features bound. After deposition, the poly-lysine is passivated by methods known in the art. The surface of the chip around the channel is coated with a thin layer of adhesive such as epoxy and a flat piece of glass comprising two holes is bonded to the chip to enclose the channel such that the holes are aligned with each end of the channel.

The RNA sample comprising unlabeled RNA and known control DNA targets is fragmented to lengths of approximately 200 mer using methods known in the art. Using a pipette, the channel is filled or nearly filled with the target. The chip is placed into an instrument that removably seals valve-controlled fluidic lines to each of the openings in the chip. In addition, the instrument controls the temperature of the chip.

The input valve 135 and exit valve 137 are adjusted so that each end of the chip is connected to a source of variable and controllable pressure that may be alternated to be above and below standard pressure as needed. The pressure sources are alternated to cause the sample to move back and forth in the channel such that the area with the features is never dry, but the sample is moved over the features. This sample movement process overcomes the limitations of diffusion and exposes more of the total sample to each feature. The mixing or sample movement process is continued continuously or periodically throughout the hybridization process. Additionally, the instrument heats the chip to the desired hybridization temperature, typically 37-65°C and maintains the temperature for 1 to 24 hours, typically overnight.

After the hybridization period is complete, the instrument's valve at the inlet of the glass chip switches from the pressure pulses to the first wash fluid. The valve switches from pressure to the waste container. The first wash fluid is pumped through the channel driving the sample to the waste container and washing the array surface to remove unbound or non-specially bound sample. The wash fluid is generally not recirculated, although it may be. Next, the input valve 135 is switched to a second wash fluid that is added by way of wash buffer inlet port 138 as required by the assay. The wash fluid may be pumped through the channel for several minutes. During the wash protocol, the chip's temperature is generally returned to room temperature.

At the conclusion of the wash protocol, the input valve 135 is switched to the elution buffer. Elution buffer is pumped into the channel by way of the elution buffer inlet port 140 until the wash buffer is removed to waste. Then the exit valve 137 closes preventing any further fluid movement. The temperature of the system is raised above the melting point of the probes 121 driving the target from the probes 121 and into the elution buffer.

The exit valve 137 switches to the electrospray tip 130 and the electrospray mass spectrometer is then activated. The elution buffer is driven through the electrospray tip 130 into the mass spectrometer. The amount of target 103 eluted at each time point is quantitated. Since the flow rate is known, the signal at each time point can be correlated to each feature on the array for target identification. The control targets are used to establish the starting and ending points of the array as well as validate the timing along the array.

In summary, the method of the present invention operates for separating and detecting a chemical moiety such as a biopolymer. The steps of the method comprise contacting a sample comprising a target molecule to a probe positioned in a channel of a substrate, capturing the target molecule by contacting it with a probe, releasing the target molecule from the probe in a defined order and detecting the target molecule released from the probe in the defined order.

Clearly, minor changes may be made in the form and construction of the invention without departing from the scope of the invention defined by the appended claims. It is not, however, desired to confine the invention to the exact form herein shown and described, but it is desired to include all such as properly come within the scope claimed.

## Claims

1. An apparatus for identifying a chemical moiety from a sample solution, comprising:
(a) a substrate having a channel with at least one linear array for capturing a chemical moiety from a sample solution; and
(b) a detector downstream from the substrate for detecting the chemical moiety received from the substrate channel after the chemical moiety has been released from the linear array in a defined order.

2. An apparatus as recited in claim 1, where the channel is a micro fluidic channel.

3. An apparatus as recited in claim 1, wherein the linear array comprises a probe.

4. An apparatus as recited in claim 1, wherein the detector is selected from the group consisting of a mass spectrometer system, an ultraviolet light system, an infrared light system, a raman spectroscopy systems and a visible light system.

5. An apparatus as recited in claim 4, wherein the mass spectrometer system comprises a MALDI system.

6. An apparatus as recited in claim 4, wherein the mass spectrometer system comprises an electrospray system.

7. An apparatus as recited in claim 4, wherein the mass spectrometer system comprises an AP-MALDI system.

8. An apparatus as recited in claim 1, wherein the probe comprises a nucleic acid molecule.

9. An apparatus as recited in claim 1, wherein the probe comprises a protein molecule.

10. An apparatus as recited in claim 1, wherein the probe comprises a carbohydrate.

11. An apparatus as recited in claim 1, wherein the probe comprises a polysaccharide.

12. An apparatus as recited in claim 1, wherein the substrate comprises a material selected from the group consisting of silicon, plastic, rubber, glass, metal, and combinations thereof.

13. An apparatus as recited in claim 2, wherein the smallest dimension of micro fluidic channel is 100 microns or less.

14. A method for separating and detecting a chemical moiety, comprising:
(a) contacting a solution comprising a target molecule to a probe positioned in a channel of a substrate;
(b) capturing the target molecule from the sample by contacting the target molecule to the probe;
(c) releasing the target molecule from the probe in a defined order, and
(d) detecting the target molecule released from the probe in the defined order.

15. A method as recited in claim 14, wherein the order of elution of the target molecule is the same as the order of binding of the target molecule to the probe.

16. A method as recited in claim 14, wherein the order of elution of the target molecule is opposite of the order of binding of the target molecule to the probe.

17. An apparatus as recited in claim 1, wherein the target comprises a nucleic acid molecule.

18. An apparatus as recited in claim 1, wherein the target comprises a protein molecule.

19. An apparatus as recited in claim 1, wherein the probe comprises a carbohydrate.

20. An apparatus as recited in claim 1, wherein the target comprises a polysaccharide.

21. An apparatus as recited in claim 1, wherein the channel comprises a small enough size to allow the target to elute off of the probe without altering the linear binding order.

22. An apparatus of claim 1, wherein the linear array comprises more than 10 features.

23. An apparatus of claim 1, wherein the linear array comprises more than 100 features.

24. An apparatus of claim 12, wherein the substrate may be flexible or rigid.

25. An apparatus of claim 1, which further comprises a valve at the entrance that permit different fluids to be directed into the channel.

26. An apparatus of claim 1, which further comprises heaters or coolers to provide a temperature controlled environment.

27. An apparatus of claim 1, which further comprises an electrospray tip at the output of the linear array and the input of an electrospray mass spectrometer

28. An apparatus of claim 1, which further comprises means to move the fluids through the array.

29. An apparatus of claim 1, wherein the input may be a sipper.

30. A method as recited in claim 14, wherein the process of releasing the target molecules involves heating the array or portions thereof.

31. A method as recited in claim 14, wherein the target molecules are not labeled prior to introduction to the linear array.

32. A method as recited in claim 14, wherein the solution contacting the probes may comprise target molecules from more than one sample and said samples are differentially labeled.
